# EUROPEAN PATENT SPECIFICATION

(11) **EP 1 292 183 B1**
(45) Date of publication and mention of the grant of the patent: **30.11.2005**
(21) Application number: 01941429.1
(22) Date of filing: 20.06.2001
(51) Int. Cl.: A01J 5/017

(54) **METHOD AND DEVICE FOR DETECTION OF A DEVIATING BEHAVIOUR OF A MILKING ANIMAL**
VERFAHREN UND VORRICHTUNG ZUR ENTDECKUNG EINER VERHALTENSSTÖRUNG EINES MILCHGEBENDEN TIERES
PROCEDE ET DISPOSITIF DE DETECTION D'UN ECART DE COMPORTEMENT D'UN ANIMAL A TRAIRE

(30) Priority: 22.06.2000 SE 0002355
(43) Date of publication of application: 19.03.2003
(73) Proprietor: DeLaval Holding AB, 147 21 Tumba (SE)
(72) Inventor: BIRK, UZI, S-141 43 Huddinge (SE)
(74) Representative: Janson, Ronny
(86) International application number: PCT/SE2001/001418
(87) International publication number: WO 2001/097602

(56) References cited:
- EP-A1- 0 439 239
- EP-A1- 0 786 203
- WO-A1-00/08921
- WO-A1-94/19931
- DE-A1- 4 113 700

## Description

### Technical field

The present invention relates to a method for detection of a deviating behaviour of a milking animal, as is set forth in the preamble of claim 1, more specifically to a method to determine whether said animal performs deviating movements during automatic milking compared to normal. The present invention also relates to a device as set forth in the preamble of claim 9.

### Description of related art

It is generally known that the physical health of an animal may be detected by observing a deviating behaviour of the animal compared to a normal behaviour. An example of a deviating behaviour is a restless animal that have an injury, is in a mating-season, is sick or just is newly introduced in a heard.

Several methods are known describing how to detect odd behaviour of an animal, especially for milking animals in an automatic milking system.

The international patent publication WO 94/19931 describes a method and a device for surveying animal functions. This is possible by using sensors that register animal movements to determine if the animal is restless.

In EP 0786203 another method is described where the movements of the milking animal are registered by providing the animal with a step counter on one of its legs. The step counter transfer the number of movements by radio to a central unit, where an analysis takes place to determine if the number of movements is normal compared to earlier results, and thereby establish if the animal is well or not.

These methods experience an essential drawback in that they both require additional hardware to determine if the animal moves during the automatic milking procedure. Additional hardware normally means higher cost for implementation and an additional source of malfunction that may occur during normal operation.

### Summary of the invention

The present invention seeks to provide a method and a control device for detection of a deviating behaviour of a milking animal, especially for a cow, which overcomes the prior art problems.

According to an aspect of the present invention, there is provided a method as specified in claim 1.

The invention is also directed to a control device which implements the mentioned method as specified in claim 9.

An advantage with the present invention is that the method is easy and cheap to implement in an automatic milking system.

Another advantage with the present invention is that the method may be used to determine the physical health of a milking animal by registering the movements of the robot during the milking procedure instead of registering the movement of the milking animal.

Still another advantage is that the present invention may be achieved without any additional hardware.

The invention will now be described in more detail with reference to the accompanying drawings.

### Brief description of drawings

Fig. 1 shows an overview of an automatic milking system implementing the present invention.
Fig. 2a and 2b shows graphs for illustrating the function of the invention.

### Detailed description of preferred embodiments

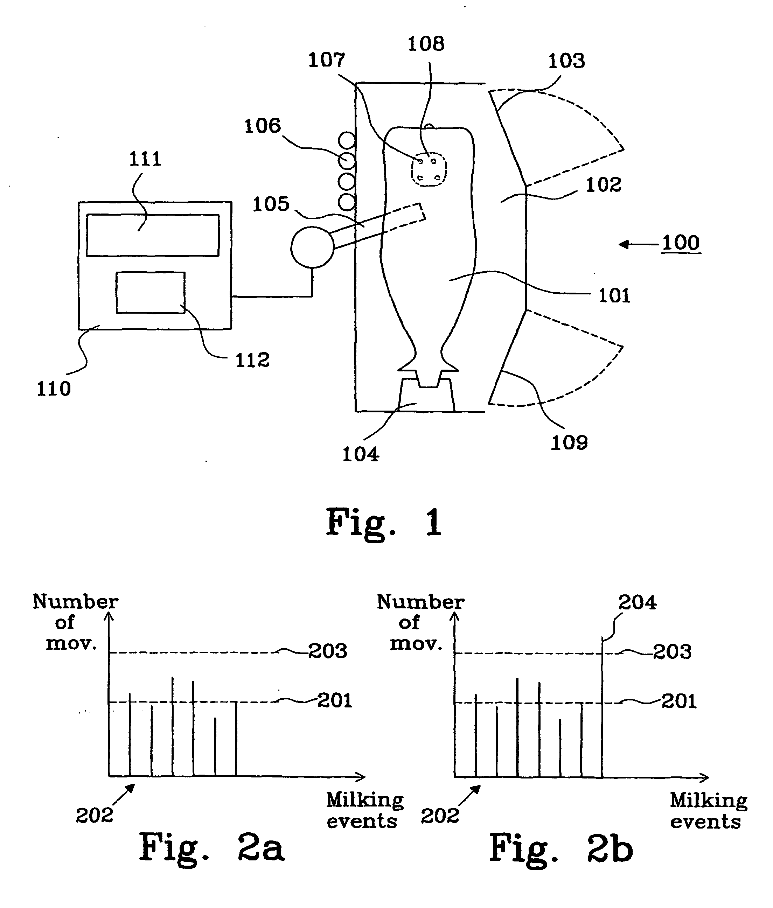

Figure 1 shows an overview of an automatic milking system 100 according to the present invention, where a milking animal 101 has entered a milking parlour 102 through an entrance 103. The milking animal 101 receives food from a feeding tray 104 upon entering the milking parlour 102. The automatic milking system 100 further comprises an automatic positioning device 105, such as a robot, which detects the position of each teat 107 before applying teat cups 106 to the milking animals teats 107. The teats 107 are arranged on an udder 108. The positioning device 105 also cleans the teats prior to milking by use of a cleaning device (not shown) and the teats may also be disinfected after milking by use of a disinfecting device (not shown). When the milking animal 101 has been milked, an exit gate 109 is opened and the animal 101 may leave the milking parlour to allow the next animal to enter the milking parlour 102 through the entrance 103. The positioning device 105 is connected to a computer 110, comprising a memory 111 and analysing means 112.

The procedure for establishing the position of a teat 107 on a milking animal 101 comprises a number of steps, which cause the positioning device 105 to move. The positioning device 105 normally comprises two lasers that each emit a laser beam, which are detected by a camera to form an image. The positioning device 105 is positioned at a starting point and the positioning device 105 is moved in several steps to establish the position of the teat by analysing each received image in the camera. If the animal moves during the positioning procedure the positioning device may have to restart the procedure from the starting point, which will increase the number of movements compared to normal.

If the positioning device 105 manage to establish the position of a teat 107 and then tries to apply a teat cup 106 to the teat 107, this may cause the animal to move if the teat is injured. This results in that the procedure to establish the position of the teat has to be performed again, which lead to an increase in number of movements to establish the position before the teat cup 106 is applied to the teat 107.

Figure 2a and 2b shows graphs illustrating the number of movements for the positioning device 105 before applying a teat cup 106 to a teat 107 as a function of consecutive milking events.

The number of movements in Fig. 2a illustrate normal behaviour of the animal and an average value 201, as a reference value, is calculated based on the registered number of movements 202. A warning level 203 is determined, where the value of the warning level 203 may be established as the reference value 201 plus a predetermined value. The difference between the warning level and the reference value make up the largest acceptable deviation value that is permitted without the system issuing a warning signal. The reference value may shift dependent on how the average value is calculated. The average value may be established on a number of previous movements, e.g. the ten latest number of movements, or may be established on all previously registered number of movements.

Fig. 2b shows a graph where a milking event 204 has a higher value than said warning level 203, which means that the difference between the reference value 201 and the registered number of movements 204 is higher than the largest acceptable deviation value, and a warning signal is thus issued by the system.

When the animal enters the milking parlour, the automatic milking system identifies the animal by reading a transponder fitted to a collar around the neck of the animal (not shown). The computer retrieves previously stored animal related information from the memory 111 regarding the number of movements for the positioning device 105 to perform different steps in the milking procedure, i.e. cleaning, attaching teat cups, disinfecting. The information may also relate to the time to perform these different steps and/or the number of tries to locate each teat and perform each step. This information may be used as reference values during analyses.

The computer 110 register the number of movements of the positioning device 105 during each step of the present milking procedure, including also time and/or the number of tries if desired, and compare these results with the reference values from the memory in the analysing means 112. If the results deviate, more than the predetermined values, from the reference values, the computer 110 will issue a warning signal to alert the farmer that said animal is showing a deviating behaviour. The warning signal may be stored in a log within the computer or immediately sent to the farmer through radio communication, e.g. a SMS-message. Furthermore, the animal is preferably separated from the heard after the milking so that the farmer easily can find the animal which caused the warning signal. If the animal instead would remain in the milking parlour 102, it could not be accessed by other animals waiting to be milked, or if the animal joined the heard after milking, it would be more difficult to find the animal for the farmer.

Each reference value may comprise an average value measured over a predetermined time period for each milking animal or for all animals in the heard.

By establishing the number of movements of the positioning device during the period of time when an animal to be milked is cleaned and/or during the period of time when teat cups are connected to the teats and/or during the period of time when the teats are disinfected, it is possible, by executing the comparisons and averaging process indicated above, to obtain an indication regarding the physical condition of the animal. It is also possible to obtain an indication when registering the period of time for each of the above mentioned steps and compare with an average period of time and/or by registering the number of tries to perform the above mentioned steps and compare with an average number of tries.

## Claims

1. A method for detection of a deviating behaviour of a milking animal (101) during a milking procedure in an automatic milking system (100), said system comprising an automatic positioning device (105) having a process for positioning teat cups (106) and said milking procedure comprises at least one sequence causing the positioning device (105) to move, said method comprising the steps of:
- obtaining an identity of said animal (101),
- retrieving information related to said animal (101) from a memory (111) in a computer (110), said information comprising at least one reference value derived from at least one sequence of a previous milking procedure,
**characterised in that** said method further comprises the steps of:
- registering at least one value, related to said automatic positioning device (105), from said at least one sequence of the present milking procedure,
- comparing each reference value with each registered value in an analysing means (112) in said computer (110), and
- issuing of a warning signal from said computer (110) if any of said registered values deviates from the corresponding reference value more than a predetermined deviation value,
whereby the process for positioning the teat cups (106) is used for determining if the milking animal (101) deviates from a normal behaviour.

2. The method according to claim 1, wherein said step of registering at least one value relates to any of the following:
- time for said positioning device (105) to position said teat cups (106) for each sequence of said milking procedure; and/or
- number of movements of said positioning device (105) for each sequence of said milking procedure; and/or
- number of tries for performing positioning said teat cups (106) for each sequence of said milking procedure.

3. The method according to claim 1 or 2, wherein said reference value comprises an average value of previously registered values related to said positioning device (105).

4. The method according to claim 3, wherein said average value is derived from previously registered values related to at least said animal.

5. The method according to claim 3, wherein said average value is derived from previously registered values related to said animal.

6. The method according to any of claim 1-5, wherein said step for issuing a warning signal further comprises a step of sending a message to a supervisor indicating an animal (101) with a deviating behaviour.

7. The method according to any of claim 1-6, wherein said step for issuing a warning signal further comprises a step of adding a record to a log in said computer (110).

8. The method according to any of claim 1-7, wherein said milking animal (101) is separated from the heard if a warning signal is issued.

9. A device for detection of a deviating behaviour of a milking animal (101) during milking procedure in an automatic milking system (100), said milking procedure comprises at least one sequence causing the positioning device (105) to move, said system comprising
- an automatic positioning device (105) having a process for positioning teat cups (106),
- means for identifying said animal (101), and
- means to retrieve information related to said animal (101) from a memory (111) in a computer (110), said information comprising at least one reference value derived from at least one sequence of a previous milking procedure,
**characterised in that** said device further comprises:
- means to register at least one value, related to said automatic positioning device (105), from said at least one sequence of the present milking procedure,
- means to compare each reference value with each registered value in an analysing means (112) in said computer (110), and
- means to issue a warning signal from said computer (110) if any of said registered values deviates from the corresponding reference value more than a predetermined deviation value from each corresponding reference value,
whereby the device for positioning the teat cups (106) is used for determining if the milking animal (101) deviates from a normal behaviour.

## Patentansprüche

1. Verfahren zum Erfassen eines abweichenden Verhaltens eines Melktieres (101) während eines Melkvorgangs in einem automatischen Melksystem (100), wobei das System eine automatische Positioniervorrichtung (105) mit einem Arbeitsvorgang zum Positionieren der Zitzenbecher (106) umfasst, und wobei der Melkvorgang mindestens eine Sequenz umfasst, die eine Bewegung der Positioniervorrichtung (105) verursacht, wobei das Verfahren die folgenden Schritte umfasst:
- Ermitteln der Identität des Tieres (101),
- Abrufen von auf dieses Tier (101) bezogenen Informationen von einem Speicher (112) in einem Computer (110), wobei die Informationen mindestens einen Bezugswert umfassen, der von mindestens einer Sequenz eines vorangegangenen Melkvorgangs abgeleitet ist,
**dadurch gekennzeichnet, dass** das Verfahren weiterhin die folgenden Schritte umfasst:
- Registrieren mindestens eines auf die automatische Positioniervorrichtung (105) bezogenen Wertes von der mindestens einen Sequenz des gerade stattfindenden Melkvorgangs,
- Vergleichen jedes Bezugswertes mit jedem registrierten Wert in einer Analyseeinrichtung (112) im Computer (110) und
- Ausgeben eines Warnsignals vorn Computer (110), wenn irgendeiner der registrierten Werte vom entsprechenden Bezugswert um mehr als einen vorbestimmten Abweichungswert abweicht,
wobei der Arbeitsvorgang zum Positionieren der Zitzenbecher (106) benutzt wird zur Bestimmung, ob das Melktier (101) von einem normalen Verhalten abweicht.

2. Verfahren nach Anspruch 1, wobei sich der Schritt des Registrierens mindestens eines Wertes auf einen der folgenden bezieht:
- die Zeit, die die Positioniervorrichtung (105) zum Positionieren der Zitzenbecher (106) für jede Sequenz des Melkvorganges benötigt; und/oder
- die Anzahl der Bewegungen der Positioniervorrichtung (105) für jede Sequenz des Melkvorgangs; und/oder
- die Anzahl von Versuchen zur Durchführung der Positionierung der Zitzenbecher (106) für jede Sequenz des Melkvorgangs.

3. Verfahren nach Anspruch 1 oder 2, wobei der Bezugswert einen Mittelwert von vorher registrierten Werten umfasst, die sich auf die Positioniervorrichtung (105) beziehen.

4. Verfahren nach Anspruch 3, wobei der Mittelwert von vorher registrierten Werten abgeleitet ist, die sich auf mindestens ein Tier beziehen.

5. Verfahren nach Anspruch 3, wobei der Mittelwert von vorher registrierten Werten abgeleitet ist, die sich auf dieses Tier beziehen.

6. Verfahren nach einem der Ansprüche 1 bis 5, wobei der Schritt zum Abgeben eines Warnsignals weiterhin einen Schritt umfasst, in dem an einen Überwacher eine Nachricht gesendet wird, die auf ein Tier (101) mit einem abweichenden Verhalten hinweist.

7. Verfahren nach einem der Ansprüche 1 bis 6, wobei der Schritt zum Abgeben eines Warnsignals weiterhin einen Schritt umfasst, in dem ein Eintrag in eine Log-Datei des Computers (110) getätigt wird.

8. Verfahren nach einem der Ansprüche 1 bis 7, wobei das Melktier (101) von der Herde getrennt wird, falls ein Warnsignal abgegeben wird.

9. Vorrichtung zur Erfassung eines abweichenden Verhaltens eines Melktieres (101) während eines Melkvorgangs in einem automatischen Melksystem (100), wobei der Melkvorgang mindestens eine Sequenz umfasst, die eine Bewegung der Positioniervorrichtung (105) verursacht, wobei das System
- eine automatische Positioniervorrichtung (105) mit einem Arbeitsvorgang zum Positionieren von Zitzenbechern (106) umfasst sowie
- eine Einrichtung zum Identifizieren eines Tieres (101) und
- eine Einrichtung zum Abrufen von auf dieses Tier (101) bezogenen Informationen von einem Speicher (111) in einem Computer (110),
wobei die Informationen mindestens einen Bezugswert umfassen, der von mindestens einer Sequenz eines vorangegangenen Melkvorgangs abgeleitet ist,
**dadurch gekennzeichnet, dass** die Vorrichtung weiterhin
- eine Einrichtung zum Registrieren mindestens eines auf die automatische Positioniervorrichtung (105) bezogenen Wertes von der mindestens einen Sequenz des gerade stattfindenden Melkvorgangs umfasst sowie
- eine Einrichtung zum Vergleichen jedes Bezugswertes mit jedem registrierten Wert in einer Analysevorrichtung (112) im Computer (110) und
- eine Einrichtung zum Abgeben eines Warnsignals vom Computer (110), wenn irgendeiner der registrierten Werte vom entsprechenden Bezugswert um mehr als einen vorbestimmten Abweichungswert abweicht,
wobei die Vorrichtung zum Positionieren der Zitzenbecher (106) verwendet wird zur Bestimmung, ob das Melktier (101) von einem normalen Verhalten abweicht.

## Revendications

1. Procédé pour la détection d'un comportement anormal d'un animal (101) à traire pendant une procédure de traite dans un système de traite automatique (100), ledit système comportant un dispositif (105) de positionnement automatique ayant un processus pour positionner des gobelets-trayeurs (106) et ladite procédure de traite comporte au moins une séquence provoquant un mouvement du dispositif de positionnement (105), ledit procédé comprenant les étapes qui consistent :
- à obtenir une identité dudit animal (101),
- à récupérer une information concernant ledit animal (101) à partir d'une mémoire (111) dans un ordinateur (110), ladite information comprenant au moins une valeur de référence provenant d'au moins une séquence d'une procédure de traite précédente,
**caractérisé en ce que** ledit procédé comprend en outre les étapes qui consistent :
- à enregistrer au moins une valeur, associée audit dispositif (105) de positionnement automatique, provenant de ladite, au moins une, séquence de la présente procédure de traite,
- à comparer dans ledit ordinateur (110) chaque valeur de référence à chaque valeur enregistrée dans un moyen d'analyse (112), et
- à délivrer un signal d'avertissement depuis ledit ordinateur (110) si l'une quelconque desdites valeurs enregistrées s'écarte de la valeur de référence correspondante de plus d'une valeur d'écart prédéterminée, grâce à quoi le processus pour le positionnement des gobelets-trayeurs (106) est utilisé pour déterminer si l'animal à traire (101) s'écarte d'un comportement normal.

2. Procédé selon la revendication 1, dans lequel ladite étape d'enregistrement d'au moins une valeur porte sur l'un quelconque des points suivants :
- le temps mis par ledit dispositif de positionnement (105) pour positionner lesdits gobelets-trayeurs (106) pour chaque séquence de ladite procédure de traite ; et/ou
- le nombre de mouvements dudit dispositif de positionnement (105) pour chaque séquence de ladite procédure de traite ; et/ou
- le nombre d'essais pour effectuer le positionnement desdits gobelets-trayeurs (106) pour chaque séquence de ladite procédure de traite.

3. Procédé selon la revendication 1 ou 2, dans lequel ladite valeur de référence comprend une valeur moyenne de valeurs précédemment enregistrées, associées audit dispositif de positionnement (105).

4. Procédé selon la revendication 3, dans lequel ladite valeur moyenne provient de valeurs précédemment enregistrées concernant au moins ledit animal.

5. Procédé selon la revendication 3, dans lequel ladite valeur moyenne provient de valeurs précédemment enregistrées concernant ledit animal.

6. Procédé selon l'une quelconque des revendications 1 à 5, dans lequel ladite étape pour délivrer un signal d'avertissement comprend en outre une étape d'envoi d'un message à un superviseur indiquant un animal (101) présentant un comportement anormal.

7. Procédé selon l'une quelconque des revendications 1 à 6, dans lequel ladite étape de délivrance d'un signal d'avertissement comprend en outre une étape consistant à additionner un enregistrement à un relevé dans ledit ordinateur (110).

8. Procédé selon l'une quelconque des revendications 1 à 7, dans lequel ledit animal à traire (101) est séparé du troupeau si un signal d'avertissement est délivré.

9. Dispositif pour détecter un comportement anormal d'un animal à traire (101) pendant une procédure de traite dans un système de traite automatique (100), ladite procédure de traite comprenant au moins une séquence amenant le dispositif de positionnement (105) à se déplacer, ledit système comportant :
- un dispositif (105) de positionnement automatique ayant un processus pour le positionnement de gobelets-trayeurs (106),
- un moyen pour identifier ledit animal (101), et
- un moyen pour récupérer une information concernant ledit animal (101) à partir d'une mémoire (111) dans un ordinateur (110), ladite information comprenant au moins une valeur de référence provenant d'au moins une séquence d'une procédure de traite précédente,
**caractérisé en ce que** ledit dispositif comporte en outre :
- un moyen pour enregistrer au moins une valeur, associée audit dispositif (105) de positionnement automatique, provenant de ladite, au moins une, séquence de la présente procédure de traite,
- un moyen pour comparer chaque valeur de référence à chaque valeur enregistrée dans un moyen d'analyse (112) dans ledit ordinateur (110), et
- un moyen pour délivrer un signal d'avertissement à partir dudit ordinateur (110) si l'une quelconque desdites valeurs enregistrées s'écarte de la valeur de référence correspondante de plus d'une valeur d'écart prédéterminée à partir de chaque valeur de référence correspondante,
grâce à quoi le dispositif pour le positionnement des gobelets-trayeurs (106) est utilisé pour déterminer si l'animal à traire (101) s'écarte d'un comportement normal.
